# EUROPÄISCHE PATENTANMELDUNG

(11) **EP 1 405 686 A1**
(43) Veröffentlichungstag der Anmeldung: **07.04.2004**
(21) Anmeldenummer: 03021073.6
(22) Anmeldetag: 18.09.2003
(51) Int. Cl.: B23B 29/04, B23B 27/16

(54) **Schneidplattenbefestigungssystem**

(30) Priorität: 01.10.2002 DE 10245906
(71) Anmelder: Sandvik AB, 811 81 Sandviken (SE)
(72) Erfinder: Scherbarth, Stefan, Dr., 41462 Neuss (DE)
(74) Vertreter: Weber, Dieter, Dr.

(57) **Zusammenfassung**

Die vorliegende Erfindung betrifft eine Schneidplatte mit einer oberen und einer unteren Fläche, sowie umlaufenden Seitenflächen, welche die obere und die untere Fläche miteinander verbinden, wobei die untere Fläche im wesentlichen eben ist und dafür vorgesehen ist, auf einer im wesentlichen ebenen Fläche eines Plattensitzes (12) eines Schneidplattenhalters (13) angeordnet zu werden. Des weiteren betrifft die vorliegende Erfindung einen Schneidplattenhalter mit einem Plattensitz (12) mit im wesentlichen ebener Sitzfläche zur Aufnahme einer Schneidplatte (1) sowie ein Schneidwerkzeug, das zwei Komponenten, eine Schneidplatte (1 ) und einen Schneidplattenhalter (13), aufweist. Um ein Schneidplattenbefestigungssystem zur Verfügung zu stellen, das insbesondere bei der Verwendung von Schneidplatten, die an drei Seiten schneiden können, eine sichere, paßgenaue und vor allem kostengünstige Verbindung der Schneidplatte an dem Schneidplattenhalter zur Verfügung zu stellen, so daß sogar auf seitliche Anschlagflächen auf dem Plattensitz verzichtet werden kann, wird erfindungsgemäß vorgeschlagen, daß die mindestens untere Fläche zumindest ein Halteloch (3) oder einen Haltestift mit einem nicht kreisförmigen Querschnitt aufweist. Hinsichtlich des Schneidplattenhalters wird vorgeschlagen, daß auf der Sitzfläche (12) zumindest ein Haltestift (2) für das Eingreifen in ein in der unteren Fläche einer Schneidplatte (1) angeordnetes Halteloch (3) oder ein Halteloch für die Aufnahme eines an der unteren Fläche einer Schneidplatte (1 ) angeordneten Haltestifts vorgesehen ist, und bezüglich des Schneidwerkzeugs wird vorgeschlagen, daß eine der Komponenten ein Halteloch (3) und die andere Komponente einen Haltestift (2) aufweist, wobei der Haltestift (2) bei auf einen an dem Schneidplattenhalter vorgesehenen Plattensitz aufgesetzter Schneidplatte in das Halteloch (3) eingreift, wobei der Querschnitt des Halteloches (3) und/oder des Haltestiftes (2) nicht kreisförmig ist.

## Beschreibung

Die vorliegende Erfindung betrifft ein Schneidplattenbefestigungssystem und insbesondere ein Schneidwerkzeug bestehend aus einem Schneidplattenhalter und einer Schneidplatte mit einem solchen Schneidplattenbefestigungssystem.

Beim Spanen mit geometrisch bestimmten Schneiden wird häufig das Schneidteil in Form einer Schneidplatte (manchmal auch als Schneideinsatz bezeichnet) auf einem Werkzeugträger bzw. Schneidplattenhalter befestigt. Dies hat den Vorteil, daß bei Verschleißerscheinungen im allgemeinen nur die Schneidplatte ausgetauscht werden muß, während der Schneidplattenhalter weiterverwendet werden kann. Allerdings muß dafür Sorge getragen werden, daß die Schneidplatte auf dem Schneidplattenhalter fest und sehr exakt angeordnet ist.

Bei den meisten bekannten Schneidplattenbefestigungssystemen wird die Schneidplatte in einem Plattensitz an einem Schneidplattenhalter aufgenommen. Dabei sind meist drei Anschlagflächen vorgesehen, um die exakte Positionierung der Schneidplatte im Plattensitz in allen drei Raumrichtungen zu definieren. Die Schneidplatte, die im allgemeinen eine obere und eine untere Fläche sowie Seitenflächen, die die obere und die untere Fläche miteinander verbinden, aufweist, wird daher zunächst mit der unteren Fläche auf den Plattensitz aufgelegt (erste Anschlagfläche) und dann so auf dem Plattensitz verschoben bzw. angeordnet, daß sie mit zwei Seitenflächen an zwei seitliche Anschlagflächen anliegt. Die Schneidplatte wird dann meist mit Hilfe einer Schraube oder einer geeigneten Klemmeinrichtung, wie z.B. einer Pratze, in dieser Position festgehalten. Normalerweise behält die Schneidplatte während des Ineingrifftretens mit dem Werkstück ihre Position bei diesem Befestigungssystem zuverlässig bei, da sie zu jeder Zeit an den drei Anschlagflächen des Plattensitzes anliegt.

Es gibt jedoch Anwendungsbeispiele, bei denen es nicht möglich ist, einen Plattensitz mit mehreren Anschlagflächen vorzusehen. So ist es beispielsweise beim Einstechen von Nuten, aber auch beim Kopierdrehen häufig notwendig, Schneidplatten einzusetzen, die an drei Seiten schneiden können. Dies bedeutet, daß an drei Seiten der Schneidplatte kein Kontakt zwischen der Seitenwand des Plattensitzes und der Seitenwand der Schneidplatte besteht. Beispielhaft seien hier Schneidplatten zum Abstechen von Werkstücken, aber auch Schneidplatten für tiefere Einstechoperationen genannt.

Um dennoch eine sichere Befestigung der Schneidplatte im Plattensitz zu gewährleisten, wird bei Befestigungssystemen des Standes der Technik in die untere Fläche der Schneidplatte in Längsrichtung ein Profil eingebracht, das mit einem entsprechend angepaßten Profil, das in die Grundfläche des Plattensitzes eingebracht wird, in Eingriff tritt, so daß die Schneidplatte gegen ein seitliches Verrutschen gesichert ist. Typische verwendete Profilformen sind V- oder Verzahnungsprofile. Beispielsweise gibt es Schneidplatten mit einer V-förmigen Nut in der unteren Fläche, die auf V-förmige Rippen auf dem Plattensitz des Schneidplattenhalters aufgesetzt werden. Bei diesen Befestigungssystemen wird die Schneidplatte entweder durch eine Schraube oder durch einen Spannfinger auf das Profil gedrückt und so in ihrer Lage fixiert.

Dieses Schneidplattenbefestigungssystem ist jedoch sehr aufwendig, da sowohl die Herstellung des Profils in der Schneidplatte als auch die Herstellung des profilierten Plattensitzes deutlich komplizierter und daher kostenintensiver ist als beispielsweise die Herstellung einer ebenen Auflagefläche an Schneidplatte und Schneidplattenträger. Hierbei ist insbesondere die Einhaltung enger Fertigungstoleranzen zwischen Schneidplatte und Schneidplattenträger, die für die eindeutige Positionierung der Schneidplatte auf dem Schneidplattenträger notwendig ist, sehr aufwendig.

Es wurde auch bereits versucht, die Schneidplatte mit Hilfe zweier Schrauben auf dem Schneidplattenträger zu fixieren. Diese Ausführungsform konnte sich in der Praxis jedoch nicht durchsetzen. Dies liegt zum einen daran, daß der Wechsel der Schneidplatte sehr zeitaufwendig ist, da nun statt nur einer Schraube zwei Schrauben gelöst und fixiert werden müssen. Zum anderen ist die Positioniergenauigkeit der Schneidplatte auf dem Schneidplattenträger für viele Anwendungsfälle nicht ausreichend. Selbst wenn Paßschrauben mit hochpräzisen Schraubenbohrungen mit sehr kleiner Toleranzabweichung zum Einsatz kommen, werden keine hochpräzisen Positioniergenauigkeiten erreicht. Die Verwendung von Paßschrauben sowie auch das in der Regel notwendige Schleifen der Schraubenbohrungen führt darüber hinaus zu einer deutlichen Verteuerung des Werkzeuges.

Bei dieser Ausführungsform hat sich des weiteren gezeigt, daß aufgrund der engen Passungstoleranzen und der unterschiedlichen thermischen Ausdehnungskoeffizienten von dem Schneidstoff, der im allgemeinen aus Hartmetall besteht, und den Halteschrauben, die im allgemeinen aus Stahl gefertigt sind, es beim Auswechseln der erwärmten Schneidplatte nach dem Zerspanungsvorgang zu erheblichen Problemen kommen kann, so daß im Extremfall vor dem Auswechseln der Schneidplatten diese zunächst abgekühlt werden müssen. Die mit diesem Befestigungssystem verbundenen Kosten sind daher derart hoch, daß es sich auf dem Markt nicht durchgesetzt hat.

Ausgehend von diesem Stand der Technik ist es daher Aufgabe der vorliegenden Erfindung, ein Schneidplattenbefestigungssystem zur Verfügung zu stellen, das insbesondere bei der Verwendung von Schneidplatten, die an drei Seiten schneiden können, eine sichere, paßgenaue und vor allem kostengünstige Verbindung der Schneidplatte an dem Schneidplattenhalter zur Verfügung zu stellen, so daß sogar auf seitliche Anschlagflächen auf dem Plattensitz verzichtet werden kann.

Insbesondere ist es Aufgabe der Erfindung, ein Schneidwerkzeug mit einem solchen Schneidplattenbefestigungssystem zur Verfügung zu stellen.

Erfindungsgemäß wird diese Aufgabe bei einem Schneidwerkzeug gelöst, das zwei Komponenten, eine Schneidplatte und einen Schneidplattenhalter, aufweist, wobei eine der Komponenten ein Halteloch und die andere Komponente einen Haltestift aufweist. Haltestift und Halteloch sind derart angeordnet, daß der Haltestift in das Halteloch eingreift, wenn die Schneidplatte auf den Plattensitz des Schneidplattenhalters aufgesetzt wird. Erfindungsgemäß hat das Halteloch und/oder der Haltestift einen nicht kreisförmigen Querschnitt.

Dadurch wird sichergestellt, daß, wenn der Haltestift in das Halteloch eingreift, der Stift die Innenfläche des Haltelochs nicht entlang eines größeren kreisförmigen Bereichs berührt. Es hat sich nämlich gezeigt, daß bei Verwendung von Haltestift und Halteloch mit aufeinander angepaßten Querschnitten, kleine Abweichungen bei der Herstellung der in Kontakt tretenden Flächen zu größeren Verschiebungen zwischen Schneidplatte und Schneidplattenhalter führen können. Dadurch, daß zumindest eine Querschnittsform nicht kreisförmig ist, bilden sich meist nur wenige Kontaktpunkte bzw. Kontaktlinien zwischen Haltestift und Halteloch aus, so daß zumindest wenn die Schneidplatte gegen diese Kontaktpunkte gedrückt bzw. vorgespannt wird, die Schneidplatte auf dem Schneidplattenhalter eine definierte und vor allem reproduzierbare Position einnimmt und gegebenenfalls auftretende minimale Fertigungstoleranzen sich auch nur in einer minimalen Verschiebung der Schneidplatte gegenüber dem Schneidplattenhalter auswirken. Die Kontaktpunkte bzw. Kontaktlinien übernehmen dann die Funktion, die die seitlichen Anschlagsflächen des Plattensitzes, bei den bekannten Schneidplattenbefestigungssystemen einnehmen.

In einer bevorzugten Ausführungsform ist vorgesehen, daß der Haltestift am Schneidplattenhalter und das Halteloch in der Schneidplatte ist.

Es ist offensichtlich, daß die Herstellung eines Haltestiftes aufwendiger ist als die Herstellung eines Halteloches. Da der Schneidplattenhalter im allgemeinen eine deutlich längere Standzeit aufweist als die Schneidplatte selbst, wird der etwas aufwendigere Stift mit Vorteil an dem Schneidplattenhalter eingesetzt. Zudem muß der Haltestift hier nicht unbedingt aus dem Schneidstoff gefertigt sein, sondern kann, ohne besondere Schneideigenschaften zu besitzen, auf die spezifischen Anforderungen, insbesondere eine hohe Festigkeit, optimiert werden. Es hat sich gezeigt, daß die Herstellung des Haltestifts vorzugsweise aus HSS-Stahl erfolgt.

In einer weiteren bevorzugten Ausführungsform ist eine Spannvorrichtung vorgesehen, welche die Schneidplatte auf dem Plattensitz in eine Richtung, vorzugsweise in Richtung der Kontaktpunkte, drückt, so daß der Haltestift gegen die Innenwand des Halteloches gedrückt wird. Durch diese Maßnahme kann die Positioniergenauigkeit der Schneidplatte auf dem Schneidplattenhalter noch weiter verbessert werden. So ist es beispielsweise möglich, die Querschnittsabmessungen des Haltestifts deutlich kleiner als die Querschnittsabmessungen des Haltelochs zu wählen. Durch die Spannvorrichtung wird dann der Haltestift gegen eine Wand des Halteloches gedrückt. Es versteht sich, daß entweder der Abschnitt des Haltestiftes, der mit der Innenwand des Halteloches in Eingriff tritt oder der Abschnitt der Innenwand des Halteloches, der mit dem Haltestift in Eingriff tritt, nicht kreisförmig bzw. kreisbogenförmig ausgebildet ist, so daß der Haltestift eine feste, genau definierte und reproduzierbare Position an der Innenwand des Halteloches einnimmt.

Diese Spannvorrichtung kann beispielsweise mit Hilfe eines Federelementes verwirklicht werden. Alternativ können aber auch Keile oder Haken vorgesehen werden, die die Schneidplatte relativ zu dem Schneidplattenhalter in eine bestimmte Richtung drücken.

Mit Vorteil ist die Spannvorrichtung jedoch dergestalt ausgebildet, daß die Schneidplatte eine Durchgangsbohrung und der Schneidplattenhalter eine Gewindebohrung aufweist, wobei bei auf dem Plattensitz aufgenommener Schneidplatte der Mittelpunkt der Durchgangsbohrung und der Mittelpunkt der Gewindebohrung leicht versetzt zueinander angeordnet sind, so daß bei Befestigung der Schneidplatte auf dem Schneidplattenhalter mit Hilfe einer Schraube, die durch die Durchgangsbohrung hindurch in die Gewindebohrung eingreift, die Schneidplatte relativ zum Schneidplattenhalter verschoben wird, so daß der Haltestift an die Innenwand des Haltelochs schlägt bzw. gedrückt wird.

Dabei könnte beispielsweise die Schraube mit einem Senkkopf versehen sein, so daß durch das Festziehen der Schraube die von der Schneidplatte auf den Schneidplattenhalter über die Halteloch-Haltestift-Verbindung ausgeübte Kraft eingestellt werden kann.

Mit anderen Worten wird bei der Montage zunächst die Schneidplatte auf den Schneidplattenhalter aufgelegt, so daß der Haltestift in das Halteloch eingreift. Anschließend wird der Schneidplattenhalter mit Hilfe der Schraube, die durch die Durchgangsbohrung in die Gewindebohrung hineingeführt wird, festgeschraubt. Dadurch, daß die Gewindebohrung und die Durchgangsbohrung so bemessen sind, daß die Mittelpunkte der Durchgangsbohrung und der Gewindebohrung bei auf den Schneidplattenhalter aufgesetzter Schneidplatte leicht zueinander versetzt sind, wird sichergestellt, daß durch das Festschrauben der Schneidplatte auf dem Schneidplattenhalter eine Kraft auf die Haltestift-Halteloch-Verbindung ausgeübt wird, so daß der Haltestift im Halteloch die vorbestimmte, genau definierte Position einnimmt.

Es hat sich als besonders zweckmäßig erwiesen, wenn Haltestift und Halteloch derart ausgestaltet sind, daß bei auf dem Plattensitz aufgesetzter Schneidplatte der Haltestift an nur zwei Anschlagpunkten an der Innenwand des Halteloches anliegt. Durch die Zweipunktanlage kann insbesondere in Kombination mit der Spannvorrichtung eine extrem hohe Positionierungsgenauigkeit der Schneidplatte auf dem Schneidplattenhalter erreicht werden.

Darüber hinaus hat sich gezeigt, daß die Anschlagpunkte vorzugsweise derart angeordnet sind, daß eine Linie, die den Mittelpunkt des Haltestiftes mit einem Anschlagpunkt verbindet mit der vorgesehenen Hauptbelastungsrichtung einen Winkel zwischen 20° und 70°, vorzugsweise zwischen 35° und 55° einschließt. Dadurch ist insbesondere dann, wenn die Schneidplatte mit dem Werkstück in Eingriff tritt und daher hohe Kräfte auf die Schneidplatte ausgeübt werden, sichergestellt, daß die Schneidplatte in ihrer vorgesehenen Position verbleibt. Ein seitliches Verrutschen der Schneidplatte auf dem Schneidplattenhalter ist selbst bei erheblicher Kraftbeaufschlagung der Schneidplatte ausgeschlossen.

Wie bereits ausgeführt wurde, kommt es erfindungsgemäß auf das Zusammenwirken des Haltestiftes mit dem Halteloch an. Dabei ist es unerheblich, ob die Schneidplatte oder der Schneidplattenhalter mit einem Halteloch bzw. Haltestift ausgestattet ist. Zudem ist es unerheblich, ob die Schneidplatte oder der Schneidplattenhalter einen Haltestift bzw. ein Halteloch mit nicht kreisförmigem Querschnitt aufweist.

Daher wird erfindungsgemäß auch eine Schneidplatte zur Verfügung gestellt mit einer oberen und einer unteren Fläche sowie umlaufenden Seitenflächen, welche die obere und die untere Fläche miteinander verbinden, wobei die untere Fläche im wesentlichen eben ist und dafür vorgesehen ist, auf einer im wesentlichen ebenen Fläche eines Plattensitzes eines Schneidplattenhalters angeordnet zu werden, wobei die untere Fläche zumindest ein Halteloch oder einen Haltestift mit einem nicht kreisförmigen Querschnitt aufweist.

Eine solche Schneidplatte kann dann erfindungsgemäß an einem Schneidplattenhalter mit Befestigungsloch oder Befestigungsstift mit nahezu beliebigem Querschnitt, das heißt auch mit einem kreisförmigen Querschnitt, befestigt werden, so daß sich eine feste und wohl definierte Position der Schneidplatte auf dem Schneidplattenhalter ergibt..

Wie bereits ausgeführt worden ist, weist die Schneidplatte vorzugsweise ein Halteloch auf, in das ein an einem Schneidplattenhalter angebrachter Haltestift eingreift. Auch wenn prinzipiell der Haltestift an der Schneidplatte und das Halteloch an dem Schneidplattenhalter angeordnet sein könnten, wird im folgenden davon ausgegangen, daß das Halteloch in der Schneidplatte vorgesehen ist.

Das Halteloch kann als Sackloch oder als Durchgangsloch ausgeführt sein. Mit Vorteil ist das Halteloch jedoch als Durchgangsloch ausgebildet, da dies die Herstellungskosten senkt. Allerdings hat diese Ausführungsform den Nachteil, daß sich in dem Durchgangsloch Späne verfangen können.

Mit Vorteil wird daher der Haltestift des Schneidplattenhalters derart bemessen, daß er nicht über die obere Fläche der Schneidplatte vorsteht und vorzugsweise in etwa mit dieser abschließt.

In einer weiteren besonders bevorzugten Ausführungsform weist die Schneidplatte zwei Haltelöcher mit nicht kreisförmigem Querschnitt auf. Diese Ausführungsform ermöglicht insbesondere, daß als Wendeschneidplatten ausgebildete Schneidplatten verwendet werden. Das eine Halteloch mit nicht kreisförmigem Querschnitt tritt dann erfindungsgemäß mit dem Haltestift in Eingriff, während das andere Halteloch als Durchgangsbohrung für die Aufnahme einer Befestigungsschraube verwendet werden kann. Wird die Schneidplatte, da die aktive Schneidkante verschlissen ist, gewendet, tauschen die beiden Haltelöcher ihre Funktion, so daß nun das andere Halteloch mit dem Haltestift in Eingriff tritt und das eine Halteloch als Durchgangsbohrung für die Aufnahme der Befestigungsschraube dient.

Der Querschnitt des Halteloches (bzw. des Haltestiftes) kann im Prinzip jede beliebige nicht kreisförmige Form haben. Besonders bevorzugt ist jedoch eine Oval- bzw. Ellipsenform, eine Polygonform, aber auch ein Querschnitt, der zumindest abschnittsweise die Form eines Spitzbogens (gotischer Bogen) hat.

In einer besonders bevorzugten Ausführungsform besteht der Querschnitt aus einem Kreisbogen von etwa 180°, an den sich ein Spitzbogen von ebenfalls etwa 180° anschließt.

Besonders zweckmäßig ist die Schneidplatte dreiseitig schneidend ausgeführt. Da das erfindungsgemäße Schneidplattenbefestigungssystem auf das Vorsehen von seitlichen Anschlagflächen auf dem Plattensitz verzichtet, kann eine dreiseitige schneidende Schneidplatte paßgenau und sehr sicher befestigt werden.

Weiterhin wird erfindungsgemäß ein Schneidplattenhalter mit einem Plattensitz mit im wesentlichen ebener Sitzfläche zur Aufnahme einer Schneidplatte zur Verfügung gestellt, wobei auf der Sitzfläche zumindest ein Haltestift für das Eingreifen in ein in der unteren Fläche einer Schneidplatte angeordnetes Halteloch vorgesehen ist.

Dadurch ist es, wie bereits mehrfach ausgeführt, möglich, eine Schneidplatte auf dem Plattensitz des Schneidplattenhalters aufzunehmen und in eine vorbestimmte Position zu bringen.

Mit Vorteil hat der Haltestift eine nicht kreisförmige Querschnittsform.

Auch wenn prinzipiell jede nicht kreisförmige Querschnittsform geeignet ist, so hat sich bei Versuchen gezeigt, daß ein ovalförmiger oder polygonförmiger Querschnitt, aber auch ein Querschnitt, der zumindest abschnittsweise die Form eines Spitzbogens (gotischen Bogens) hat, besonders vorteilhaft ist. Als besonders zweckmäßig hat sich ein Querschnitt erwiesen, der aus einem Kreisbogen von etwa 180° und einem sich daran anschließenden Spitzbogen von etwa 180° besteht.

Eine weitere bevorzugte Ausführungsform sieht eine Gewindebohrung in der Sitzfläche des Plattensitzes vor. Die Gewindebohrung dient dazu, die Schneidplatte auf dem Plattensitz zu befestigen.

Weiterhin ist in einer besonders bevorzugten Ausführungsform eine Spannvorrichtung vorgesehen für das Spannen einer auf dem Plattensitz angeordneten Schneidplatte in eine vorbestimmte Richtung.

Der Haltestift kann prinzipiell auf verschiedene Arten ausgestaltet sein. Es hat sich gezeigt, daß der Haltestift beispielsweise durch eine Schraube mit Zylinderkopf gebildet werden kann. Der Haltestift kann dann einfach in eine entsprechende Gewindebohrung in der Plattensitzfläche eingeschraubt werden.

Eine alternative Ausführungsform sieht vor, daß der Haltestift eine Senkkopfschraube ist. In diesem Fall müssen das Halteloch der Schneidplatte und/oder der kegelförmige Teil der Senkkopfschraube, welche den Haltestift bildet, so ausgestaltet sein, daß die Senkkopfschraube möglichst nur an zwei Punkten bzw. zwei Bereichen die Bohrung der Schneidplatte berührt. Dies kann beispielsweise durch Verwendung einer Schraubenbohrung erreicht werden, bei der der obere Teil die Form eines Kegelstumpfes mit asymmetrischem Querschnitt hat.

Weitere Vorteile, Merkmale und Anwendungsmöglichkeiten der vorliegenden Erfindung werden deutlich anhand der folgenden Beschreibung bevorzugter Ausführungsformen sowie der dazugehörigen Figuren. Es zeigen:
- Figur 1: eine Draufsicht auf eine erste Ausführungsform des erfindungsgemäßen Schneidplattenbefestigungssystems,
- Figur 2: eine Draufsicht auf die Schneidplatte der Ausführungsform von Figur 1,
- Figur 3: eine Draufsicht auf eine zweite Ausführungsform des erfindungsgemäßen Schneidplattenbefestigungssystems,
- Figur 4: eine Draufsicht auf eine dritte Ausführungsform des erfindungsgemäßen Schneidplattenbefestigungssystems,
- Figur 5: eine Explosionsansicht des erfindungsgemäßen Schneidplattenbefestigungssystems und
- Figur 6: eine perspektivische Ansicht des erfindungsgemäßen Schneidplattenbefestigungssystems.

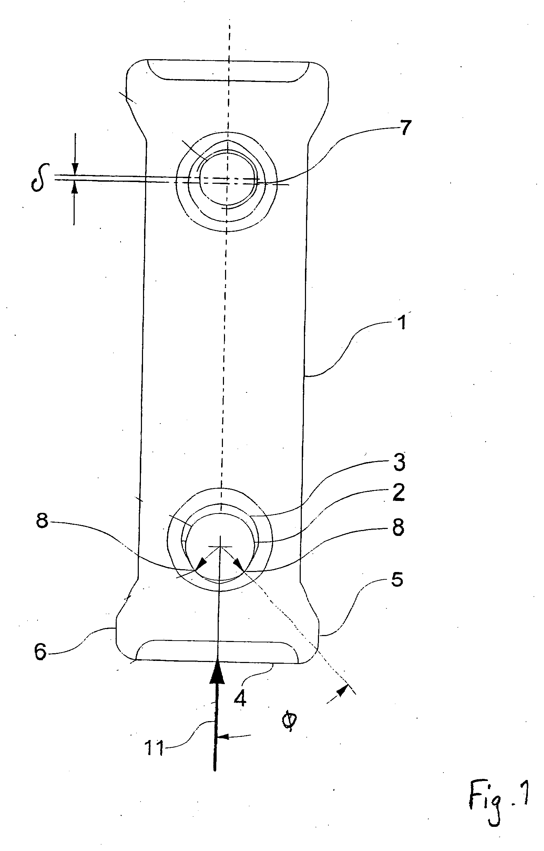

In Figur 1 ist eine erste Ausführungsform des erfindungsgemäßen Schneidplattenbefestigungssystems zu sehen. Gezeigt ist eine Draufsicht auf die obere Fläche einer Schneidplatte 1. Die Schneidplatte 1 weist zwei Haltelöcher 3 auf. Die Schneidplatte 1 ist als Wendeschneidplatte ausgeführt. Man erkennt die Schneidkanten 4, 5, 6, welche während des Abstechvorgangs mit dem Werkstück in Kontakt treten. Der in der Figur 1 dargestellte Pfeil mit der Bezugszahl 11 stellt die Hauptbelastungsrichtung dar. Wird die auf einem Schneidplattenhalter befestigte Schneidplatte 1 in das Werkstück eingestochen, so tritt zuerst die Schneidkante 4, die sich in Figur 1 ganz unten befindet, mit dem Werkstück in Eingriff. Bei der gezeigten Schneidplatte ist aber in bestimmten Anwendungsfällen auch ein seitliches Verfahren der Schneidplatte samt Schneidplattenhalter vorgesehen, während das Werkzeug mit dem Werkstück in Eingriff ist, so daß die seitlichen Schneidkanten 5, 6 ebenfalls mit dem Werkstück in Eingriff treten können.

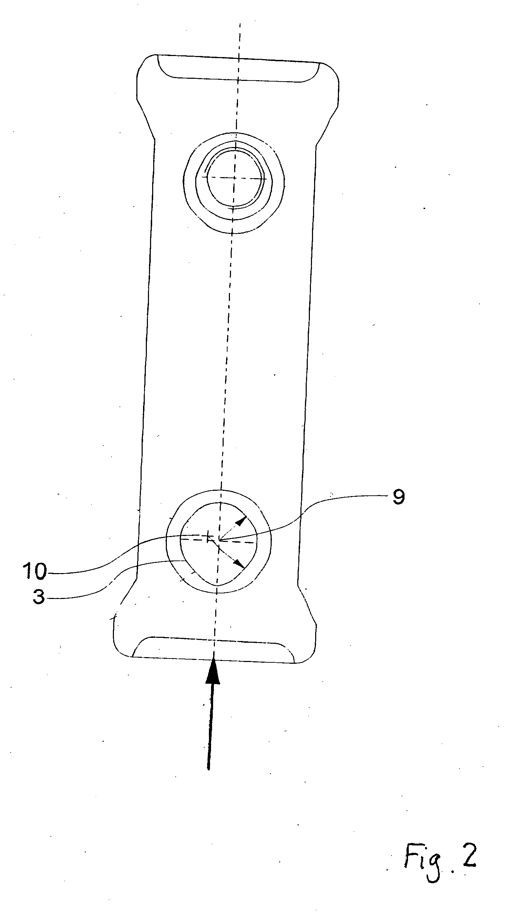

Deutlich zu erkennen ist, daß die beiden Haltebohrungen 3 einen nicht kreisförmigen Querschnitt haben. Dies ist in Figur 2 noch einmal deutlicher gezeigt. Das Halteloch 3 hat hier einen Querschnitt, der sich zum einen aus einem Kreisbogen von etwa 180° und zum anderen aus einem Spitzbogen von ebenfalls etwa 180° zusammensetzt. Der Kreisbogen wird aus einem Halbkreis um den Mittelpunkt 9 gebildet, während sich der Spitzbogen aus zwei Kreissegmenten zusammensetzt, deren Mittelpunkt 10 gegenüber dem Mittelpunkt 9 des Kreisbogens versetzt ist.

Das eine Halteloch 3 mit nicht kreisförmigem Querschnitt tritt mit dem Haltestift 2 in Eingriff, der sich von einem unterhalb der Schneidplatte angeordneten Schneidplattenhalter durch das Halteloch 3 hindurch erstreckt. Dies ist in Figur 1 deutlich zu erkennen.

Der Umfang des Haltestiftes 2 und die Innenfläche des Halteloches 3 sind so aufeinander angepaßt, daß sich Haltestift und Halteloch in der Schnittansicht an genau zwei Kontaktpunkten 8 berühren.

Genaugenommen liegen hier keine Kontaktpunkte, sondern Kontaktlinien vor.

Diese Kontaktpunkte 8 sind mit Vorteil so angeordnet, daß der in der Figur 1 eingezeichnete Kontaktwinkel Φ etwa 45° beträgt. Dabei wird der Kontaktwinkel durch den Winkel, den eine Gerade, die durch den Mittelpunkt des Haltestiftes und einen Kontaktpunkt 8 verläuft, und die Hauptbelastungsrichtung eingeschlossen wird.

Durch diese Maßnahme ist sichergestellt, daß die Kontaktpunkte 8 als seitliche Anschlagspunkte fungieren. Wenn daher - aufgrund des Ineingrifftretens der Schneidplatte mit dem Werkstück- auf die Schneidplatte eine Kraft ausgeübt wird, führt dies dazu, daß die Schneidplatte über die Haltestift/Halteloch-Verbindung in Richtung des Kontaktpunktes gedrückt wird. Eine seitliche Verschiebung der Schneidplatte relativ zu dem Schneidplattenhalter, das heißt eine Verschiebung der Schneidplatte in Figur 1 nach rechts oder links, wird durch die gewählte Anordnung der Kontaktpunkte 8 selbst bei starker Belastung der seitlichen Schneidkanten 5, 6 verhindert.

In Figur 1 ist weiterhin die Gewindebohrung 7 zu erkennen, die sich ebenfalls in dem unterhalb der Schneidplatte 1 befindlichen Plattensitz des Schneidplattenhalters befindet. In der in Figur 1 gezeigten Position ist der Mittelpunkt 12 der Gewindebohrung 7 gegenüber dem Mittelpunkt 9 des anderen Halteloches 3 (in der Figur 1 oben dargestellt) um den Abstand δ versetzt. Wird nun eine Befestigungsschraube durch das in Figur 1 oben dargestellte Halteloch 3 in die Gewindebohrung 7 eingeschraubt, so wird die Befestigungsschraube während des Einschraubens zunächst mit der in Figur 1 oben dargestellten Innenfläche des oberen Haltelochs 3 in Kontakt treten. Wird dann die Befestigungsschraube weiter angezogen, führt dies dazu, daß die Schneidplatte 1 relativ zu dem darunter angeordneten Schneidplattenhalter nach oben gedrückt wird, wodurch eine feste Verbindung des Haltestiftes 2 mit dem unteren Halteloch 3 an den Kontaktpunkten 8 sichergestellt wird.

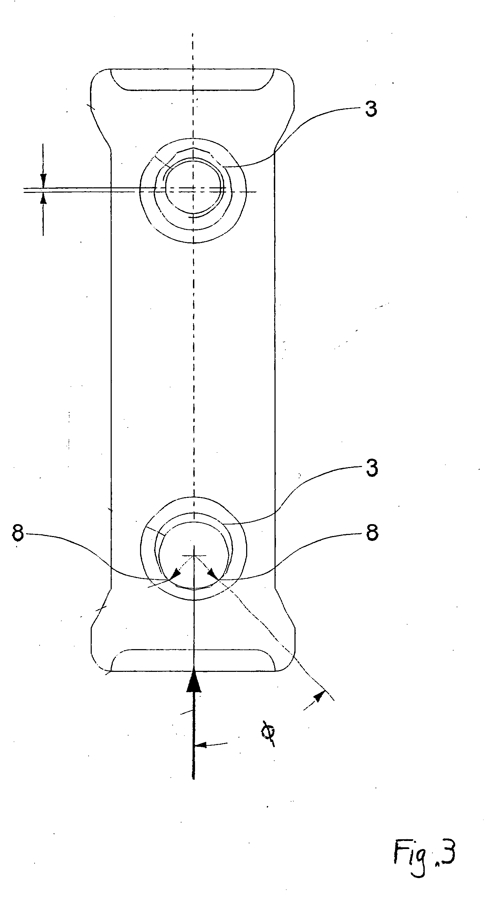

In Figur 3 ist eine zweite Ausführungsform des Schneidplattenbefestigungssystems gezeigt. Man erkennt deutlich, daß hier die Haltelöcher 3 einen gegenüber der Ausführungsform von Figur 1 veränderten Querschnitt aufzeigen. Hier ist der Querschnitt teilweise polygonprofilartig, nämlich rautenförmig ausgebildet. An diesem Beispiel wird deutlich, daß die konkrete Form des Querschnitts nur eine untergeordnete Rolle spielt. Wesentlich ist lediglich, daß Haltestift 2 und Halteloch 3 derart aufeinander abgestimmt sind, daß sie eine definierte Position zueinander einnehmen. Dies erfolgt in Figur 3 ebenfalls an den beiden Kontaktpunkten 8, die aufgrund ihrer entsprechenden Anordnung als seitliche Anschlagpunkte fungieren.

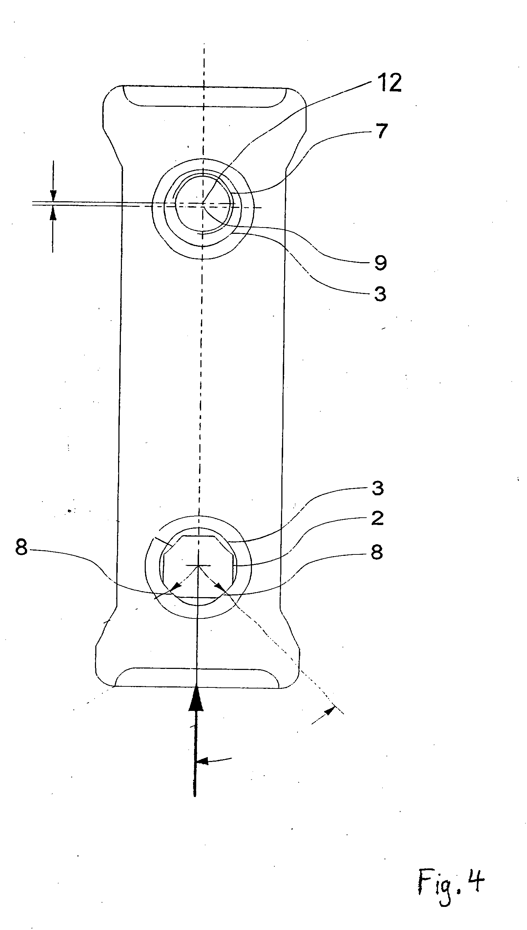

In Figur 4 ist eine dritte Ausführungsform der Erfindung gezeigt. Hier wird deutlich, daß nicht notwendigerweise das Halteloch einen nicht kreisförmigen Querschnitt haben muß, sondern stattdessen auch der Haltestift 2 entsprechend ausgebildet sein kann. Der Haltestift 2 hat hier einen polygonartigen Querschnitt, so daß er wieder an lediglich zwei Kontaktpunkten 8 mit dem Halteloch 3 in Kontakt tritt.

Allen gezeigten Ausführungsformen ist gemein, daß das Querschnittsprofil symmetrisch zu der Hauptbelastungsrichtung 11 ausgeführt ist. Es hat sich gezeigt, daß diese Anordnung besonders zweckmäßig ist.

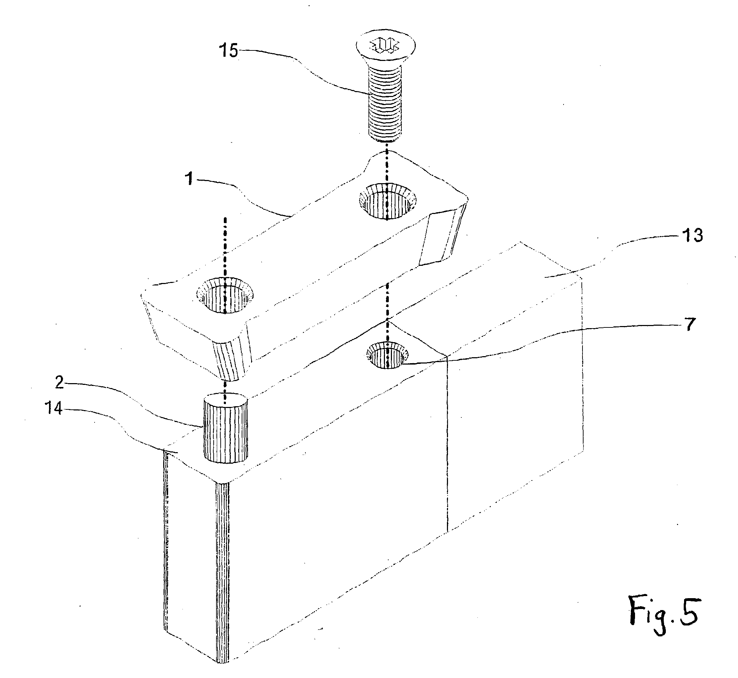

In Figur 5 ist eine Explosionsdarstellung des erfindungsgemäßen Schneidplattenbefestigungssystems gezeigt, anhand derer die Montage der Schneidplatte 1 an dem Schneidplattenhalter 13 deutlich wird. Der Schneidplattenhalter 13 besitzt einen Plattensitz 14 mit ebener Auflagefläche. An dem Plattensitz 14 sind ein Haltestift 2 sowie eine Gewindebohrung 7 angeordnet. Für die Befestigung der Schneidplatte 1 an dem Schneidplattenhalter 13 wird zunächst die Schneidplatte 1, die zwei Haltelöcher 3 aufweist, derart auf den Schneidplattenhalter 13 aufgesetzt, daß der Haltestift 2 in ein Halteloch 3 der Schneidplatte eintritt. Als nächstes wird die Befestigungsschraube 15 durch das andere Halteloch 3 der Schneidplatte 1 in die Gewindebohrung 7 des Schneidplattenhalters 13 eingesetzt und festgeschraubt. Aufgrund der leicht versetzten Anordnung des Halteloches 3 gegenüber der Gewindebohrung 7 wird durch Festziehen der Befestigungsschraube 15 die Schneidplatte 1 gegen den Haltestift gezogen. Es versteht sich, daß statt dessen die Anordnung auch so gewählt werden könnten, daß die Schraube die Schneidplatte gegen den Haltestift drückt.

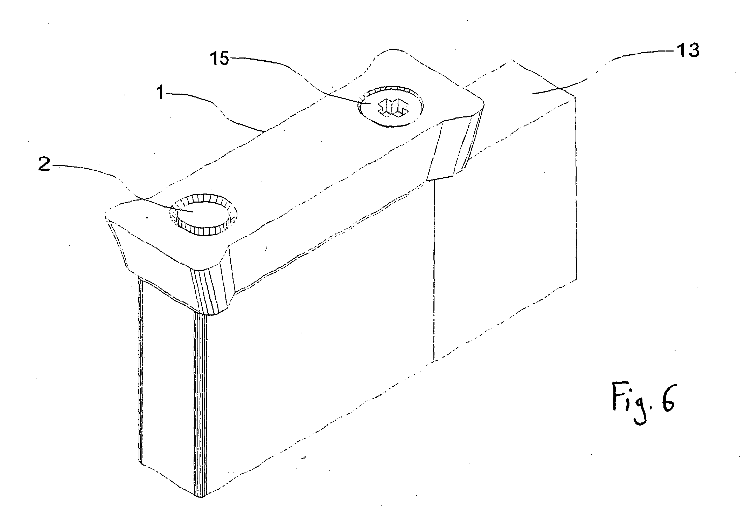

In Figur 6 ist in einer perspektivischen Ansicht das zusammengesetzte System dargestellt.

Durch das erfindungsgemäße Schneidplattenbefestigungssystem wird die wirtschaftliche Herstellung von dreiseitig schneidenden Schneidplatten möglich. Dies liegt im wesentlichen daran, daß ein Plattensitz mit ebenem Grund verwendet werden kann, was die Herstellung der Schneidplatten gegenüber den Schneidplatten des Standes der Technik deutlich kostengünstiger macht. Weiterhin können Spielpassungen mit relativ großen Toleranzen gewählt werden, da durch das erfindungsgemäße Schneidplattenbefestigungssystem die Schneidplatte eindeutig auf dem Schneidplattenträger positioniert wird. Durch die Zweipunktbefestigung kommt es zu einer derart wirksamen Fixierung der Schneidplatte auf dem Schneidplattenhalter, daß selbst bei hohen Schnittkräften keine Relativbewegung der Schneidplatte gegenüber dem Schneidplattenhalter erfolgt.

Zum Wechseln der Schneidplatte, beispielsweise aufgrund von Verschleiß, ist bei Verwendung der in den Figuren gezeigten Kombination aus einem Haltestift und einer Halteschraube nur das Lösen und Fixieren einer Schraube notwendig. Wird ein zylindrischer Haltestift verwendet, so ist man bei der Wahl des Materials für den Haltestift nicht auf Schraubenwerkstoffe beschränkt und kann beispielsweise auch Stähle mit hoher Festigkeit, wie z.B. HSS-Stähle, einsetzen. Weiterhin kann der Haltestift so ausgestaltet sein, daß er in der Schneidplatte vertieft zu liegen kommt, so daß Späne sich nicht an dem oberen Teil des Stiftes verfangen und diesen zerstören können, wie dies häufig bei Köpfen von Schneidplattenschrauben des Standes der Technik beobachtet wird.

### Bezugszeichenliste

- 1: Schneidplatte
- 2: Haltestift
- 3: Halteloch
- 4-6: Schneidkanten
- 7: Gewindebohrung
- 8: Kontakt- bzw. Anschlagpunkte
- 9: Mittelpunkt des als Durchgangsbohrung dienenden Haltelochs
- 10: Mittelpunkt
- 11: Hauptbelastungswinkel
- 12: Plattensitz; Mittelpunkt der Gewindebohrung
- 13: Schneidplattenhalter
- 14: Plattensitz
- 15: Befestigungsschraube

## Patentansprüche

1. Schneidplatte mit einer oberen und einer unteren Fläche, sowie umlaufenden Seitenflächen, welche die obere und die untere Fläche miteinander verbinden, wobei die untere Fläche im wesentlichen eben ist und dafür vorgesehen ist, auf einer im wesentlichen ebenen Fläche eines Plattensitzes (12) eines Schneidplattenhalters (13) angeordnet zu werden, **dadurch gekennzeichnet, daß** die mindestens untere Fläche zumindest ein Halteloch (3) oder einen Haltestift mit einem nicht kreisförmigen Querschnitt aufweist.

2. Schneidplatte nach Anspruch 1, **dadurch gekennzeichnet, daß** das Halteloch (3) vorzugsweise als Durchgangsloch ausgebildet ist.

3. Schneidplatte nach Anspruch 2, **dadurch gekennzeichnet, daß** zwei Haltelöcher (3) mit nicht kreisförmigem Querschnitt vorgesehen sind.

4. Schneidplatte nach einem der Ansprüche 1 bis 3, **dadurch gekennzeichnet, daß** der Querschnitt des Halteloches eine elliptische bzw. ovale Form hat.

5. Schneidplatte nach einem der Ansprüche 1 bis 3, **dadurch gekennzeichnet, daß** der Querschnitt des Halteloches (3) polygonförmig ist.

6. Schneidplatte nach einem der Ansprüche 1 bis 3, **dadurch gekennzeichnet, daß** der Querschnitt zumindest abschnittsweise die Form eines Spitzbogens hat.

7. Schneidplatte nach Anspruch 6, **dadurch gekennzeichnet, daß** der Querschnitt des Halteloches (3) aus einem Kreisbogen von etwa 180° und einem Spitzbogen von etwa 180° besteht.

8. Schneidplatte nach einem der Ansprüche 1 bis 7, **dadurch gekennzeichnet, daß** die Schneidplatte (1) dreiseitig schneidend ausgeführt ist.

9. Schneidplatte nach einem der Ansprüche 1 bis 8, **dadurch gekennzeichnet, daß** die Schneidplatte als Wendeschneidplatte ausgeführt ist.

10. Schneidplattenhalter mit einem Plattensitz (12) mit im wesentlichen ebener Sitzfläche zur Aufnahme einer Schneidplatte (1), **dadurch gekennzeichnet, daß** auf der Sitzfläche (12) zumindest ein Haltestift (2) für das Eingreifen in ein in der unteren Fläche einer Schneidplatte (1) angeordnetes Halteloch (3) oder ein Halteloch für die Aufnahme eines an der unteren Fläche einer Schneidplatte (1) angeordneten Haltestifts vorgesehen ist.

11. Schneidplattenhalter nach Anspruch 10, **dadurch gekennzeichnet, daß** das Haltloch bzw. der Haltestift (2) eine nicht kreisförmige Querschnittsform hat.

12. Schneidplattenhalter nach Anspruch 11, **dadurch gekennzeichnet, daß** der Querschnitt des Haltestiftes (2) bzw. des Haltlochs eine elliptische bzw. ovale Form hat.

13. Schneidplattenhalter nach Anspruch 11, **dadurch gekennzeichnet, daß** der Querschnitt des Haltestiftes (2) bzw. des Haltelochs polygonförmig ist.

14. Schneidplattenhalter nach Anspruch 11, **dadurch gekennzeichnet, daß** der Haltestift (2) bzw. das Halteloch einen Querschnitt aufweist, der zumindest abschnittsweise die Form eines Spitzbogens hat.

15. Schneidplattenhalter nach Anspruch 14, **dadurch gekennzeichnet, daß** der Querschnitt des Haltestiftes (2) bzw. des Haltelochs aus einem Kreisbogen von etwa 180° und einem Spitzbogen von etwa 180° besteht.

16. Schneidplattenhalter nach einem der Ansprüche 10 bis 15, **dadurch gekennzeichnet, daß** in der Sitzfläche des Plattensitzes (12) eine Gewindebohrung (7) vorgesehen ist.

17. Schneidplattenhalter nach einem der Ansprüche 10 bis 16, **dadurch gekennzeichnet, daß** eine Spannvorrichtung für das Spannen einer auf dem Plattensitz angeordneten Schneidplatte in eine vorbestimmte Richtung vorgesehen ist.

18. Schneidplattenhalter nach einem der Ansprüche 10 bis 17, **dadurch gekennzeichnet, daß** ein Haltestift (2) vorgesehen ist, der vorzugsweise durch eine Schraube mit Zylinderkopf gebildet wird.

19. Schneidplattenhalter nach Anspruch 18, **dadurch gekennzeichnet, daß** der Haltestift (2) eine Senkkopfschraube ist.

20. Schneidwerkzeug, das zwei Komponenten, eine Schneidplatte (1) und einen Schneidplattenhalter (13), aufweist, **dadurch gekennzeichnet, daß** eine der Komponenten ein Halteloch (3) und die andere Komponente einen Haltestift (2) aufweist, wobei der Haltestift (2) bei auf einen an dem Schneidplattenhalter vorgesehenen Plattensitz aufgesetzter Schneidplatte in das Halteloch (3) eingreift, wobei der Querschnitt des Halteloches (3) und/oder des Haltestiftes (2) nicht kreisförmig ist.

21. Schneidwerkzeug nach Anspruch 20, **dadurch gekennzeichnet, daß** der Haltestift (2) an dem Schneidplattenhalter (13) und das Halteloch (3) in der Schneidplatte (1) vorgesehen ist.

22. Schneidwerkzeug nach Anspruch 20 oder 21, **dadurch gekennzeichnet, daß** eine Spannvorrichtung vorgesehen ist, welche die Schneidplatte (1) auf dem Plattensitz (12) in eine Richtung drückt, so daß der Haltestift (2) an einer Innenwand des Halteloches (3) anliegt.

23. Schneidwerkzeug nach Anspruch 22, **dadurch gekennzeichnet, daß** die Schneidplatte (1) eine Durchgangsbohrung (3) und der Schneidplattenhalter eine Gewindebohrung (7) aufweist, wobei bei auf dem Plattensitz (14) aufgenommener Schneidplatte (1) der Mittelpunkt (9) der Durchgangsbohrung (3) und der Mittelpunkt (12) der Gewindebohrung (7) zueinander leicht versetzt sind (δ), so daß bei Befestigung der Schneidplatte (1) am Schneidplattenhalter (13) mit Hilfe einer Befestigungsschraube (15), die durch die Durchgangsbohrung hindurch in die Gewindebohrung (7) eingreift, die Schneidplatte (1) relativ zum Schneidplattenhalter (13) verschoben wird, so daß der Haltestift (2) an die Innenwand des Halteloches (3) schlägt.

24. Schneidwerkzeug nach einem der Ansprüche 20 bis 23, **dadurch gekennzeichnet, daß** bei auf dem Plattensitz (14) aufgesetzter Schneidplatte (1) der Haltestift (2) an zwei Kontakt- bzw. Anschlagpunkten (8) an der Innenwand des Halteloches (3) anliegt.

25. Schneidwerkzeug nach Anspruch 24, **dadurch gekennzeichnet, daß** eine Linie, die den Mittelpunkt des Haltestiftes (2) mit einem Kontakt- bzw. Anschlagpunkt (8) verbindet mit der vorgesehenen Hauptbelastungsrichtung (11) einen Winkel zwischen 20° und 70°, vorzugsweise zwischen 35° und 55° einschließt.
